# EUROPÄISCHE PATENTSCHRIFT

(11) **EP 2 292 469 B1**
(45) Veröffentlichungstag und Bekanntmachung des Hinweises auf die Patenterteilung: **30.03.2016**
(21) Anmeldenummer: 10009112.3
(22) Anmeldetag: 02.09.2010
(51) Int. Cl.: B60R 9/06, F16B 37/08

(54) **Befestigungseinrichtung mit einer Spannmutteranordnung**
Attachment device with a clamp
Dispositif de fixation doté d'un étrier

(30) Priorität: 02.09.2009 DE 102009039822; 02.09.2009 DE 102009039820
(43) Veröffentlichungstag der Anmeldung: 09.03.2011
(73) Patentinhaber: WESTFALIA - Automotive GmbH, 33378 Rheda-Wiedenbrück (DE)
(72) Erfinder: Aufderheide, Reinhold, 33397 Rietberg (DE); Hermbusch, Gerhard, 33449 Langenberg (DE); Peitz, Jürgen, 33378 Rheda-Wiedenbrück (DE)
(74) Vertreter: Patentanwälte Bregenzer und Reule Partnerschaftsgesellschaft mbB

(56) Entgegenhaltungen:
- EP-A2- 1 233 192
- WO-A1-00/66899
- WO-A2-2007/015976
- DE-A1- 4 037 255
- DE-A1- 4 304 239
- FR-A- 1 016 817
- FR-A1- 2 902 473
- US-A- 4 930 961
- US-A1- 2002 001 504

## Beschreibung

Die Erfindung betrifft eine Befestigungseinrichtung für einen Kraftfahrzeug-Träger, insbesondere einen Fahrradträger, mit einer auf einen Gewindeabschnitt eines Gewindekörpers aufschraubbaren Spannmutter einer Spannmutteranordnung, gemäß dem Oberbegriff des Anspruchs 1.

Eine derartige Befestigungseinrichtung geht aus US 4,930,961 hervor.

Damit die Spannmutter ausreichende Spannkräfte entfalten kann, ist üblicherweise die Steigung des Gewindes relativ gering. Dadurch wird die Bedienung jedoch erschwert, da ein Bediener eine Vielzahl von Umdrehungen durchführen muss, um die Spannmutter entlang des Gewindeabschnitts zu bewegen, mithin also die Befestigungseinrichtung zu lösen oder zu schließen bzw. zu verspannen.

Es ist daher die Aufgabe der Erfindung, eine bequem handhabbare Befestigungseinrichtung bereitzustellen.

Zur Lösung dieser Aufgabe ist eine Befestigungseinrichtung gemäß der technischen Lehre des Anspruchs 1 vorgesehen.

Die Betätigung der Spannmutteranordnung ist sehr einfach und schnell. Mit Hilfe des Betätigungskörpers - es können auch mehrere Betätigungskörper vorgesehen sein - kann die Spannmutter in ihre Freigabestellung verstellt werden, so dass ein Bediener die Spannmutter ohne eine Drehbetätigung entlang des Gewindeabschnitts verschieben kann. Ist jedoch eine Spannkraft erforderlich, verstellt der Betätigungskörper die Spannmutterteile in Eingriff mit dem Gewindeabschnitt, so dass die Spannmutter in Eingriff mit dem Gewindeabschnitt ist und verschraubt werden kann. Mindestens eines der Spannmutterteile kann auch fest mit dem Betätigungskörper verbunden oder mit diesem einstückig sein, sofern der Betätigungskörper quer zu dem Gewindeabschnitt, d.h. quer zur Schraubachse, beweglich ist und somit außer Eingriff mit dem Gewindeabschnitt gebracht werden kann.

Zum Verstellen der Spannmutter zwischen der Freigabestellung und der Eingriffstellung ist zwischen dem Betätigungskörper und den Spannmutterteilen zweckmäßigerweise ein Keilgetriebe vorhanden. Beispielsweise weist der Betätigungskörper eine entsprechende Schrägfläche oder mehrere entsprechende Schrägflächen auf. Eine Schrägfläche ist aber nicht zwingend nötig. Es kann auch eine reibschlüssige Mitnahme erfolgen.

Eine Zwangsführung der Spannmutterteile in die Eingriffstellung und/oder die Freigabestellung, die vorteilhaft zwischen dem Betätigungskörper und mindestens einem Spannmutterteil vorgesehen ist, ist vorteilhaft.

Bei den Spannmutterteilen ist es ebenfalls vorteilhaft, wenn sie Schrägflächen aufweisen. Insbesondere ist eine solche Ausführungsform bevorzugt, bei der Schrägflächen des Betätigungskörpers und der Spannmutterteile aufeinander entlang gleitbär gelagert sind.

Es versteht sich, dass aber auch dann ein Keilgetriebe realisierbar ist, wenn nur der Betätigungskörper oder nur ein diesem zugeordnetes Spannmutterteil eine Schrägfläche oder Keilfläche aufweist.

Vorzugsweise ist eine Federanordnung vorhanden, die die Spannmutterteile in die Freigabestellung beaufschlagt. Diese Federanordnung ist zweckmäßigerweise zwischen dem Betätigungskörper und den Spannmutterteilen vorgesehen.

Es ist auch möglich, dass die Spannmutterteile aufgrund einer Zwangsführung und/oder durch entsprechende Betätigung des Betätigungskörpers, z..B. eine Drehbetätigung und/oder Schiebebetätigung, außer Eingriff mit dem Gewinde kommen, also in die Freigabestellung. Weiterhin ist es denkbar, dass der Gewindeabschnitt mit der Spannmutter derart zusammenwirkt, dass er die Spannmutterteile in Richtung der Freigabestellung beaufschlagt, wenn dem der Betätigungskörper nicht entgegenwirkt. Dies bedeutet, dass die Feder oder Federanordnung vorteilhaft, aber nicht notwendig ist.

Weiterhin ist es selbstverständlich möglich, dass nicht nur zwei, sondern auch weitere Spannmutterteile vorhanden sind.

Die Spannmutterteile können auch durch Abschnitte gebildet sein, die von einem Basiskörper der Spannmutter entsprechend beweglich abstehen, so dass sie in Eingriff und außer Eingriff mit dem Gewindeabschnitt bringbar sind. Die Spannmutterteile können also Bestandteil einer insgesamt vorteilhaft einstückigen Spannmutter sein, jedoch bezüglich des Basiskörpers beweglich gelagert sein.

Selbstverständlich ist es vorteilhaft, wenn der Betätigungskörper einen Bestandteil eines Betätigungskörper-Gehäuses bildet, d.h. dass die Spannmutteranordnung im Gehäuse des Betätigungskörpers angeordnet ist. Dieses Gehäuse kann dauerhaft verschlossen, beispielsweise verschweißt sein, was einen Diebstahlschutz darstellen kann, insbesondere in Verbindung mit dem nachfolgend noch beschriebenen Schloss.

Der Betätigungskörper hat zweckmäßigerweise eine Aufnahme zum zumindest teilweisen, vorzugsweise insgesamten Aufnehmen der Spannmutter und/oder einer zwischen dem Betätigungskörper und der Spannmutter angeordneten Feder. Diese Aufnahme kann beispielsweise mit den vorgenannten Schrägflächen ausgestattet sein. Beispielsweise hat der Betätigungskörper eine topfartige Ausnehmung, in der eine oder mehrere Federn aufgenommen sind, wobei sich diese Ausnehmung mit Schrägflächen nach außen erweitert, die zugleich die Schrägflächen für das Keilgetriebe bilden. An diesen Schrägflächen ist die Spannmutter, bzw. sind deren Spannmutterteile verschieblich gelagert.

Der Betätigungskörper hat zweckmäßigerweise eine von der Spannmutter abgewandte Stützfläche zum Abstützen auf einem Widerlager derart, dass der Betätigungskörper die Spannmutter in die Eingriffstellung belastet, wenn er auf der Stützfläche abgestützt ist. Das Widerlager wird beispielsweise von einem Distanzelement oder von einem sonstigen zu spannenden Bauteil der Befestigungseinrichtung bereitgestellt.

Weiterhin ist die Spannmutter bzw. sind die Spannmutterteile vorteilhaft durch den Handgriffkörper von einer von der Stützfläche des Betätigungskörpers abgewandten Seite beaufschlagbar, bzw. abgestützt. Somit ist folgende Bedienung möglich:

Ein Bediener drückt über den Handgriffkörper auf die Spannmutter in Richtung des zu spannenden Objektes. Solange die Feder die Spannmutter jedoch in ihre Freigabestellung belastet, kann die Spannmutteranordnung axial außer Eingriff mit dem Gewindeabschnitt entlang desselben in Richtung des zu spannenden Objektes verschoben werden. Wenn dann die Stützfläche des Betätigungskörpers auf dem Objekt - direkt oder indirekt -abgestützt ist, drückt der Betätigungskörper entgegen der Federkraft der Federanordnung auf die Spannmutterteile und beaufschlagt diese in Eingriffstellung. Dann kann die Spannmutter in Richtung des zu befestigenden oder des zu spannenden Objektes geschraubt werden. Der Betätigungskörper hält sie dabei in Eingriff mit dem Gewindeabschnitt.

Bevorzugt ist es, wenn die Stützfläche vor den Handgriffkörper vorsteht. Es ist aber auch eine indirekte Abstützung möglich, beispielsweise indem ein Objekt, z.B. eine Distanzhülse oder dergleichen, in den Handgriffkörper eingreift und dort auf die Stützfläche des Betätigungskörpers wirkt.

Der Gewindeabschnitt durchdringt zweckmäßigerweise den Betätigungskörper. Es ist aber auch denkbar, dass der Gewindeabschnitt neben dem Betätigungskörper verläuft.

Der Betätigungskörper ist zweckmäßigerweise drehfest mit der Spannmutter verbunden oder verbindbar. Dies ist beispielsweise durch eine Zahnung, durch eine oder mehrere Nuten, in die entsprechende Vorsprünge eingreifen, ohne weiteres realisierbar.

Dies könnte man auch für eine Drehfestigkeit zwischen Betätigungskörper und Handgriffkörper realisieren. Der Betätigungskörper und der Handgriffkörper sind nämlich vorteilhaft drehfest miteinander verbunden oder verbindbar.

An dieser Stelle sei bemerkt, dass selbstverständlich auch eine dauerhafte oder temporäre Drehfestigkeit zwischen Handgriffkörper und unmittelbar der Spannmutter vorgesehen sein kann.

Die Formulierung "verbunden" oder "verbindbar" ist so zu verstehen, dass die jeweilige Drehfestigkeit dauerhaft sein kann oder auch temporär, beispielsweise abhängig von einer axialen Position der jeweiligen Komponenten (Betätigungskörper zu Spannmutter, Spannmutter zu Handgriffkörper, Betätigungskörper zu Handgriffkörper). Mithin ist es also vorteilhaft, wenn trotz Drehfestigkeit eine axiale Verschieblichkeit der vorgenannten Komponenten relativ zueinander zumindest temporär oder abhängig von einer axialen Position möglich ist.

Eine drehfeste Kombination Handgriffkörper - Betätigungskörper - Spannmutter ist beispielsweise dadurch realisierbar, dass der Handgriffkörper drehfest mit dem Betätigungskörper und der Betätigungskörper drehfest mit der Spannmutter verbindbar oder verbunden ist. Nochmals sei betont, dass auch eine direkte Drehfestigkeit zwischen einerseits dem Handkörper und andererseits der Spannmutter ohne weiteres realisierbar ist.

Zur Drehfestlegung des Handgriffkörpers bezüglich der Spannmutter ist gemäß der Erfindung ein Schloss vorgesehen, das zwischen einer eine Drehmitnahme der Spannmutter realisierenden Offenstellung und einer Schließstellung verstellbar ist, in der der Handgriffkörper gegenüber der Spannmutter frei drehbar ist. Das Schloss ist zweckmäßigerweise drehfest mit dem Handgriffkörper verbunden.

Das Schloss wirkt über den Betätigungskörper auf die Spannmutter und ist in der Schließstellung außer Eingriff mit dem Betätigungskörper. In der Offenstellung ist es in Eingriff mit dem Betätigungskörper. Wenn nunmehr der Betätigungskörper seinerseits mit der Spannmutter drehfest verbunden oder verbindbar ist, ist auf diesem Wege eine Drehmitnahme zwischen Handgriffkörper und Spannmutter realisiert.

Selbstverständlich ist es möglich, die Befestigungseinrichtung, insbesondere die Spannmutter oder die Spannmutteranordnung als Ganzes, anderweitig zu verschließen. Beispielsweise könnte gemäß der Erfindung, ein insbesondere an der Spannmutteranordnung, z.B. an einem Handgriffkörper, angeordnetes Schloss vorgesehen sein, das mit dem Gewindeabschnitt zusammenwirkt. Das Schloss könnte beispielsweise einen Schließvorsprung haben, der in der Schließstellung des Schlosses in den Gewindeabschnitt eingreift und so ein Verstellen der Spannmutteranordnung, insbesondere der Spannmutter oder eines der Spannmutterteile, im Sinne eines Verriegelns behindert.

Der Betätigungskörper ist zweckmäßigerweise beweglich an dem Handgriffkörper gelagert, beispielsweise axial beweglich. Auch eine Beweglichkeit quer zur Achse oder entlang einer gekrümmten Bewegungsbahn ist denkbar. Die Achse wird beispielsweise durch den Gewindeabschnitt definiert. Wenn nunmehr der Betätigungskörper zumindest einen Teil der Spannmutter aufweist bzw. ein Spannmutterteil realisiert, kann der Betätigungskörper außer Eingriff oder in Eingriff mit dem Gewindeabschnitt gebracht werden.

Die Befestigungseinrichtung weist vorteilhaft eine Schelle zur Befestigung an einem Trägerkörper insbesondere des Kraftfahrzeug-Trägers, mit einem Spannkörper zum Verspannen eines ersten Ringkörper-Spannendes und eines zweiten Ringkörper-Spannendes eines Ringkörpers der Schelle zueinander hin, auf, wobei sich der Spannkörper an einander entgegengesetzten Außenseiten der beiden Ringkörper-Spannenden abstützt, derart, dass ein zum Eingriff oder Durchgriff des Trägerkörpers vorgesehener Innenquerschnitt des Ringkörpers bei einer Verstellung des Spannkörpers von einer Lösestellung in eine Spannstellung im Sinne eines Verspannens der Befestigungseinrichtung an dem Trägerkörper verändert wird. Bei der Befestigungseinrichtung ist vorteilhaft vorgesehen, dass der Spannkörper entlang einer zu einem Zentralbereich des Innenquerschnitts der Schelle hin gerichteten, insbesondere linearen, Spannbewegungsbahn aus der Lösestellung in die Spannstellung beweglich gelagert ist, und dass zwischen dem Spannkörper und mindestens einem der Ringkörper-Spannenden zu einer Spannkraftbeaufschlagung quer zu der Spannbewegungsbahn mindestens eine Schrägfläche vorgesehen ist, deren Abstand von der Spannbewegungsbahn in Richtung des Zentralbereichs zunimmt.

Eine an sich eigenständige Erfindung betrifft also eine Befestigungseinrichtung für einen Kraftfahrzeug-Träger, insbesondere einen Fahrradträger, mit einer Schelle zur Befestigung an einem Trägerkörper insbesondere des Kraftfahrzeug-Trägers, mit einem Spannkörper zum Verspannen eines ersten Ringkörper-Spannendes und eines zweiten Ringkörper-Spannendes eines Ringkörpers der Schelle zueinander hin, wobei sich der Spannkörper an einander entgegengesetzten Außenseiten der beiden Ringkörper-Spannenden abstützt, derart, dass ein zum Eingriff oder Durchgriff des Trägerkörpers vorgesehener Innenquerschnitt des Ringkörpers bei einer Verstellung des Spannkörpers von einer Lösestellung in eine Spannstellung im Sinne eines Verspannens der Befestigungseinrichtung an dem Trägerkörper verändert wird, wobei bei der Befestigungseinrichtung vorgesehen ist, dass der Spannkörper entlang einer zu einem Zentralbereich des Innenquerschnitts der Schelle hin gerichteten, insbesondere linearen, Spannbewegungsbahn aus der Lösestellung in die Spannstellung beweglich gelagert ist, und dass zwischen dem Spannkörper und mindestens einem der Ringkörper-Spannenden zu einer Spannkraftbeaufschlagung quer zu der Spannbewegungsbahn mindestens eine Schrägfläche vorgesehen ist, deren Abstand von der Spannbewegungsbahn in Richtung des Zentralbereichs zunimmt. Es könnte auch eine konventionelle, einteilige Spannmutter verwendet werden.

Die Schelle weist eine optimale Krafteinleitung auf. Anders als bei üblichen Schellen, bei denen die Spannkraft seitlich neben dem Trägerkörper, beispielsweise einem Rohr, Bügel oder dergleichen, in die Schelle eingeleitet wird, so dass beispielsweise zwischen einer Gewindestange, die als Spannkörper der bislang üblichen Schelle dient, und dem Zentralbereich des Innenquerschnitts der Schelle bzw. dem Schellenzentrum ein Hebel entsteht. Somit ist also keine optimale Krafteinleitung bzw. Kraftübertragung zwischen dem Trägerkörper und der Schelle bzw. der an der Schelle befestigten weiteren Komponenten der Befestigungseinrichtung beim Stand der Technik möglich.

Bei einer Schelle der obengenannten Art hingegen ist der Kraftfluss optimal, da beispielsweise die Gewindestange, die als Spannkörper dient, sozusagen vom Zentralbereich der Schelle oder vom Zentrum der Schelle absteht. Dadurch ist weiterhin eine kompakte Bauart erzielt, da der Spannkörper, zum Beispiel die Gewindestange, unmittelbar vom Trägerkörper absteht und nicht seitlich daneben angeordnet ist, wie es im Stand der Technik der Fall ist.

Es versteht sich, dass die Erfindung aber auch im Zusammenhang mit "konventionellen" Schellen, also ohne Zentralverspannung, vorteilhaft ist.

Alle oder einzelne der nachfolgenden Maßnahmen sind insbesondere bei der eine an sich eigenständige Erfindung darstellenden Befestigungseinrichtung mit einer Schelle vorteilhaft, bei der der Spannkörper entlang einer zu einem Zentralbereich des Innenquerschnitts der Schelle hin gerichteten, insbesondere linearen, Spannbewegungsbahn aus der Lösestellung in die Spannstellung beweglich gelagert ist.

Die mindestens eine Schrägfläche ist beispielsweise eine Keilfläche. Man könnte also auch sagen, dass zwischen dem Spannkörper und dem Ringkörper ein Keilgetriebe oder ein Schrägflächengetriebe vorgesehen ist.

Prinzipiell ist es möglich, Schrägflächen nur an einem oder beiden der Ringkörper-Spannenden oder an einem oder beiden der dem jeweiligen Ringkörper-Spannende zugeordneten Spannbereiche des Spannkörpers vorzusehen. Besonders bevorzugt ist es jedoch, wenn an beiden Komponenten, d.h. am jeweiligen Ringkörper-Spannende als auch am Spannkörper bzw. dessen Spannbereich jeweils eine Schrägfläche vorhanden ist. Die Schrägflächen können dann unmittelbar aufeinander angeordnet sein. Dabei ist festzuhalten, dass die jeweiligen Schrägflächen zweckmäßigerweise dieselbe Neigung aufweisen, aber auch unterschiedliche Neigungen haben können.

Vorzugsweise sind Schrägflächen an einander entgegengesetzten Seiten der Ringkörper-Spannenden und/oder an einander zugewandten Seiten des Spannkörpers vorgesehen.

Bevorzugt sind die Schrägflächen Planflächen bzw. ebene Flächen. Es ist aber auch möglich, dass zueinander winkelige oder gekrümmte, insbesondere zylindrische, Schrägflächen, vorgesehen sind. Die mindestens eine Schrägfläche kann auch gestuft und/oder gezahnt sein.

Die Schrägfläche verläuft beispielsweise tangential vom jeweiligen Ringkörper-Spannende weg.

Bevorzugt ist es, wenn die Schrägfläche(n) eine nicht selbsthemmende Neigung hat/haben. Beispielsweise kann die jeweilige Schrägfläche eine Neigung im Bereich von 20 bis 60 Grad, vorzugsweise etwa 30 Grad, schräg zur Spannbewegungsbahn aufweisen.

Nun könnte sich der Spannkörper prinzipiell zwar an seiner Umgebung abstützen, beispielsweise einer beliebigen Komponente des Kraftfahrzeug-Trägers. Bevorzugt ist jedoch eine sich selbst tragende und stützende Konstruktion.

Die Befestigungseinrichtung weist vorzugsweise einen Zuganker auf, der an einer Zuganker-Halterung des Ringkörpers zugfest befestigbar oder befestigt ist. Der Spannkörper stützt sich an den Zuganker zumindest in seiner Spannstellung direkt oder indirekt ab. Eine direkte Abstützung könnte beispielsweise dadurch geschaffen sein, dass an dem Zuganker ein Gewinde vorhanden ist, das mit einem Gewinde des Spannkörpers kämmt. Durch eine Drehung des Zugankers oder des Spannkörpers ist es dann möglich, den Spannkörper entlang des Gewindeabschnitts zu verstellen, nämlich zwischen seiner Lösestellung und seiner Spannstellung in Bezug auf die Schelle.

Zur indirekten Abstützung könnte auch ein Betätigungselement an dem Zuganker vorgesehen sein, das sich seinerseits am Zuganker abstützt, beispielsweise eine Spannmutter, insbesondere die erfindungsgemäße Spannmutteranordnung.

Bei der Befestigungseinrichtung ist vorteilhaft vorgesehen, dass die mindestens eine Zuganker-Halterung des Ringkörpers und ein Zugwiderlagerelement des Zugankers mindestens eine Zuganker-Aufnahme und mindestens einen Zugvorsprung zum Eingriff in die Zuganker-Aufnahme aufweisen, wobei zweckmäßigerweise zwischen dem mindestens einen Zugvorsprung und der mindestens einen Zuganker-Aufnahme in der Lösestellung des Spannkörpers ein Spiel vorhanden ist, das in der Spannstellung verkleinert ist, und/oder wobei vorteilhaft die mindestens eine Schrägfläche im Bereich der mindestens einen Zuganker-Aufnahme angeordnet ist und in der Spannstellung in Richtung des mindestens einen Zugvorsprungs kraftbeaufschlagt ist.

Weiterhin ist es denkbar, dass zwischen dem Betätigungskörper bzw. der Spannmutter und dem Spannkörper weitere Komponenten angeordnet sind, beispielsweise die eingangs genannte Klammer und/oder ein Distanzstück.

Nun wäre es prinzipiell möglich, dass sich der Zuganker neben den Ringkörper-Spannenden am Ringkörper zugfest abstützt. Beispielsweise könnten die Ringkörper-Spannenden zwischen zwei Zuganker-Halterungen, die am Ringkörper vorgesehen sind, angeordnet sein.

Bevorzugt ist es jedoch, wenn mindestens eines, vorzugsweise beide, der Ringkörper-Spannenden zumindest ein Halterungsteil der Zuganker-Halterung aufweist. Bevorzugt ist es allerdings, wenn sich der Zuganker an beiden Ringkörper-Spannenden abstützt bzw. von beiden Ringkörper-Spannenden zugfest gehalten wird.

Die mindestens eine Zuganker-Halterung des Ringkörpers und ein Zugwiderlagerelement des Zugankers umfassen vorzugsweise eine Zugankeraufnahme und mindestens einen Zugvorsprung, der in die Zuganker-Aufnahme eingreift. Der Zugvorsprung ist beispielsweise am Zuganker, die Zuganker-Aufnahme am Ringkörper vorgesehen. Es ist aber auch die umgekehrte Anordnung (Aufnahme am Ringkörper, Vorsprung am Zuganker, Vorsprung am Ringkörper) möglich.

Zwischen der Zuganker-Aufnahme und dem Zugvorsprung ist zumindest in der Lösestellung des Spannkörpers ein Spiel vorhanden, das in der Spannstellung verkleinert oder gar nicht mehr vorhanden ist. Dadurch ist es möglich, dass sich beispielsweise das jeweilige Ringkörper-Spannende in Richtung der Bewegungsbahn bewegen kann. Es versteht sich, dass anstelle eines entsprechenden Spiels auch beispielsweise eine elastische Eigenschaft des Ringkörpers, der vorzugsweise aus Kunststoff besteht, ausreichen kann, um die Schließbewegung oder Spannbewegung des jeweiligen Ringkörper-Spannendes zuzulassen.

Bei der Befestigungseinrichtung ist vorteilhaft vorgesehen, dass die Ringkörper-Spannenden einander zugewandt offene Zuganker-Aufnahmen aufweisen, in die an einander entgegengesetzt an dem Zugwiderlagerelement des Zugankers angeordnete Zugvorsprünge eingreifen.

Wie bereits erwähnt, umfassen die Ringkörper-Spannenden vorteilhaft mindestens einen Bestandteil der Zuganker-Halterung. Bevorzugt sind dabei einander zugewandt offene Zuganker-Aufnahmen, in die aneinander entgegengesetzt an dem Zugwiderlagerelement des Zugankers angeordnete Zugvorsprünge eingreifen. Beispielsweise ist am Ende des Zugankers als Zugwiderlagerelement eine Art Platte oder eine Stauchung vorgesehen.

Der Zuganker ist zweckmäßigerweise an dem Ringkörper verdrehgesichert gehaltert. Dies erleichtert beispielsweise das Aufschrauben eines Betätigungsgliedes auf den Zuganker, der vorzugsweise einen Gewindeabschnitt aufweist.

Der Zuganker durchdringt zweckmäßigerweise den Spannkörper. Dadurch ist eine optimale Krafteinleitung und Abstützung des Spannkörpers am Zuganker möglich.

Bei der Befestigungseinrichtung ist vorteilhaft vorgesehen, dass der Spannkörper an dem Zuganker geführt ist und/oder eine Längsachse des Zugankers die Spannbewegungsbahn definiert. Bevorzugt ist es also, wenn der Spannkörper an dem Zuganker geführt ist. Eine vorteilhafte Maßnahme sieht vor, dass eine Längsachse des insbesondere stabförmigen oder geradlinig verlaufenden Zugankers die Spannbewegung definiert. An dieser Stelle sei bemerkt, dass der Zuganker nicht unbedingt einen geraden Verlauf aufweisen muss, sondern auch durchaus gekrümmt sein kann.

Bei der Befestigungseinrichtung ist vorteilhaft vorgesehen, dass der Zuganker zumindest abschnittsweise biegesteif, insbesondere stabförmig, und/oder zumindest abschnittsweise flexibel ist.

Der Zuganker ist zweckmäßigerweise zumindest abschnittsweise biegesteif. Vorzugsweise ist der Zuganker an einem oder mehreren seiner Abschnitte stabförmig. Es ist aber auch möglich, im Zusammenhang mit der erfindungsgemäßen Befestigungseinrichtung einen zumindest abschnittsweise flexiblen oder biegeflexiblen Zuganker vorzusehen. Dies ermöglicht eine optimale Anpassung an die örtlichen Gegebenheiten. Beispielsweise könnte der Zuganker aus Federstahl sein.

Bei der Befestigungseinrichtung ist vorteilhaft vorgesehen, dass der Zuganker einen insbesondere an einem Gewindestab angeordneten Gewindeabschnitt aufweist, auf den zum Verstellen des Spannkörpers eine Spannmutter oder die Spannmutteranordnung aufschraubbar ist, an der sich der Spannkörper direkt oder indirekt abstützt.

Bei der Befestigungseinrichtung ist vorteilhaft vorgesehen, dass ein Innenumfang und/oder ein Außenumfang des Ringkörpers im wesentlichen kreisringförmig ist.

Die Geometrie der Schelle ist vorzugsweise auf die jeweilige Geometrie des Trägerkörpers angepasst. Wenn der Trägerkörper beispielsweise eine rechteckige Außenkontur aufweist, ist zweckmäßigerweise der Innenumfang oder die Innenkontur des Ringkörpers ebenfalls angepasst rechteckförmig. Selbstverständlich wird man dann zur Materialeinsparung auch einen ebenfalls im Wesentlichen rechteckigen Außenumfang oder eine rechteckige Außenkontur des Ringkörpers vorteilhaft vorsehen. Insbesondere dann, wenn der Trägerkörper zylindrisch ist, beispielsweise als Zylinderrohr ausgestaltet, ist der Innenumfang des Ringkörpers zweckmäßigerweise im Wesentlichen kreisringförmig. Auch der Außenumfang des Ringkörpers kann vorteilhaft im Wesentlichen kreisringförmig sein.

Bei der Befestigungseinrichtung ist vorteilhaft vorgesehen, dass der Spannkörper eine hülsenartige oder ringartige oder teilringartige Gestalt aufweist. Der Spannkörper ist zweckmäßigerweise hülsenartig, d.h. als Hülse ausgestaltet, oder ringartig. Der Spannkörper kann aber auch teilringartig sein. In diesem Zusammenhang sei betont, dass der Spannkörper auch mehrteilig sein kann oder dass mehrere Spannkörper vorgesehen sein können.

Weiterhin ist es denkbar, dass der Spannkörper nicht unmittelbar auf den Ringkörper wirkt, sondern über ein beispielsweise als Keilelement ausgestaltetes Übertragungselement.

Bei der Befestigungseinrichtung ist vorteilhaft vorgesehen, dass der Ringkörper einteilig ist oder aus mindestens zwei miteinander verbundenen Ringsegmenten besteht und/oder sie mindestens eine insbesondere durch den Zuganker mit der Schelle verbundene Klammer zum klammerartigen Halten eines Gegenstandes, insbesondere eines Fahrrades, aufweist. Auch bei dem Ringkörper ist also nicht nur eine einteilige Bauform, sondern auch eine mehrteilige möglich. Beispielsweise kann der Ringkörper aus zwei oder mehr miteinander verbundenen oder verbindbaren Ringsegmenten bestehen.

Die Befestigungseinrichtung weist zweckmäßigerweise eine Klammer zum klammerartigen Halten eines Gegenstandes, beispielsweise eines Fahrrades oder eines sonstigen, mit insbesondere dem Kraftfahrzeug-Träger zu befördernden Gegenstandes, auf. Die Klammer wird beispielsweise von dem Zuganker gehalten, der mit der Schelle verbunden ist. Bevorzugt ist es, wenn ein und dieselbe Spannmutter zum einen zum Verspannen der Schelle am Trägerkörper und zum anderen zum Verstellen der Klammer in ihre den Gegenstand haltende Klammerstellung dient. Somit genügt eine einzige Betätigungshandlung, nämlich ein Verdrehten der Spannmutter, um zum einen die Klammer und zum anderen die Schelle zu schließen bzw. zu verspannen. Es versteht sich, dass man zu den vorgenannten Betätigungshandlungen auch separate Bauteile verwenden könnte, beispielsweise zwei von einander separate Spannmuttern, oder auch anstelle einer Spannmutter ein sonstiges Spann- oder Befestigungsbauteil, z.B. ein Hebelelement.

Bei der Befestigungseinrichtung ist vorteilhaft vorgesehen, dass die insbesondere mit einem Gewindeabschnitt des Zugankers kämmende Spannmutter zum Verstellen des Spannkörpers in seine Spannstellung vorgesehen ist. Zum Verspannen des Spannkörpers dient zweckmäßigerweise also eine Spannmutter, mit der der Spannkörper in seine Spannstellung verstellbar ist, insbesondere die Spannmutter der erfindungsgemäßen Spannmutteranordnung. In Gegenrichtung, d.h. zum Lösen der Schelle, wird zweckmäßigerweise eine Eigenspannung des Ringkörpers im Sinne eines Vergrößern des Innenquerschnitts. Der Ringkörper drückt sozusagen den Spannkörper in seine Lösestellung. Bevorzugt ist hierbei, dass aufgrund der nicht selbsthemmenden Neigung der mindestens einen Schrägfläche keine Selbsthemmung zwischen einerseits dem Ringkörper und andererseits dem Spannkörper auftritt.

Zwischen dem Spannkörper und der Spannmutter kann beispielsweise eine Distanzhülse oder ein sonstiger Distanzkörper vorgesehen sein. Die Distanzhülse ist zweckmäßigerweise zwischen der Klammer und der Schelle vorgesehen.

Der Zuganker weist zweckmäßigerweise einen Gewindeabschnitt auf. Bevorzugt ist der Zuganker als ein Gewindestab ausgestaltet oder weist einen solchen auf. Die Spannmutter kämmt zweckmäßigerweise mit einem Gewindeabschnitt des Zugankers.

Besonders bevorzugt ist die Verwendung der Erfindung bei Kraftfahrzeug-Trägern, insbesondere Fahrradträgern. Der Kraftfahrzeug-Träger kann beispielsweise am Heck oder auf dem Dach eines Kraftfahrzeuges befestigt oder befestigbar sein. Der Kraftfahrzeug-Träger ist beispielsweise ein Heckträger, der insbesondere schubladenartig aus einem Kraftfahrzeugheck ausziehbar ist. Auch eine Befestigung des Kraftfahrzeug-Trägers auf einer Anhängevorrichtung, beispielsweise einer Kugelkopfkupplung, ist vorteilhaft. Dazu weist der Kraftfahrzeug-Träger eine entsprechende Befestigungsvorrichtung zur Befestigung an der Anhängekupplung auf. Die Befestigungseinrichtung ist zweckmäßigerweise zum Befestigen eines Gegenstandes an dem Kraftfahrzeug-Träger ausgestaltet, kann aber auch zur Fixierung von Komponenten des Kraftfahrzeug-Trägers dienen.

Beispielsweise ist es möglich, mit Hilfe der erfindungsgemäßen Befestigungseinrichtung ein beweglich an einer Basis des Lastenträgers angeordnetes Bauteil, z.B. eine Stütze für eine Last, eine Trägerplattform oder dergleichen zu befestigen. Zum Beispiel kann eine Stütze schiebe- und/oder schwenkbeweglich an einer Basis des Kraftfahrzeug-Trägers gelagert sein und mittels der erfindungsgemäßen Befestigungseinrichtung ortsfest festlegbar sein, beispielsweise in einer Gebrauchsstellung und/oder einer Nichtgebrauchsstellung.

Nachfolgend wird ein Ausführungsbeispiel der Erfindung anhand der Zeichnung erläutert. Es zeigen:
- Figur 1: eine perspektivische Schrägansicht eines Kraftfahrzeug-Trägers mit einer erfindungsgemäßen Befestigungseinrichtung,
- Figur 2: eine perspektivische Schrägansicht der Befestigungseinrichtung gemäß Figur 1,

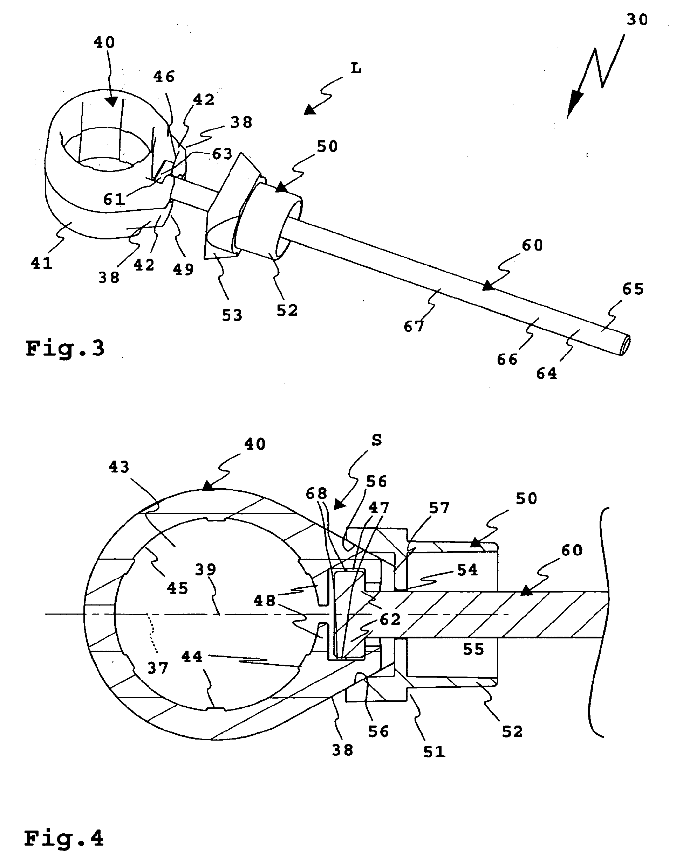

- Figur 3: eine perspektivische Schrägansicht einer Schelle und eines Zugankers der Befestigungseinrichtung gemäß Figur 2,
- Figur 4: eine Querschnittsansicht etwa in einer Schnittlinie A-A in Figur 2 eines vorderen Teils der Befestigungseinrichtung, nämlich der Schelle, des Zugankers sowie eines Spannkörpers,
- Figur 5a: eine Querschnittsansicht einer Spannmutteranordnung der Befestigungseinrichtung gemäß Figur 2 entlang einer Schnittlinie A-A, wobei die Spannmutteranordnung in Freigabestellung ist,
- Figur 5b: die Ansicht gemäß Figur 5a jedoch mit der Spannmutter in Eingriffstellung,
- Figur 6: eine Explosionsdarstellung der Spannmutteranordnung gemäß Figur 5a von schräg oben,
- Figur 7: eine Explosionsdarstellung der Spannmutteranordnung gemäß Figur 5a von schräg unten,
- Figur 8: die Spannmutteranordnung von unten im montierten Zustand
- Figur 9a: die Spannmutteranordnung gemäß Figur 8, jedoch mit einem entfernten Verschlussring, wobei ein Schloss in Eingriff mit einem Betätigungskörper ist,
- Figur 9b: die Ansicht entsprechend Figur 9a, wobei das Schloss jedoch außer Eingriff ist,
- Figur 9c: die Ansicht gemäß Figur 9b, wobei der Handgriff bzw. das Schloss gegenüber der Ansicht gemäß Figur 9b drehverstellt sind.

Ein Kraftfahrzeug-Träger 10 ist am Heck eines Kraftfahrzeugs 11 (schematisch) befestigbar, beispielsweise an dessen nicht dargestellter Anhängekupplung, mittels einer Haltevorrichtung 12. Die Haltevorrichtung 12 befindet sich an einer im Wesentlichen U-förmigen Trägerbasis 13, an der ein Schwenkgestell 14 des Kraftfahrzeug-Trägers 10 schwenkbar gelagert ist. Das Schwenkgestell 14 ist um eine Schwenkachse schwenkbar, die im Wesentlichen parallel zu einem Leuchtenträger 15 des Kraftfahrzeug-Trägers 10 verläuft. Der Leuchtenträger 15 trägt Leuchten 16 sowie einen Kennzeichenträger 17. Zwischen dem Kennzeichenträger 17 und der Haltevorrichtung 12 erstrecken sich Trägerarme 18 des Schwenkgestells 14, die in Gebrauchsstellung des Kraftfahrzeug-Trägers 10 auf darunter liegende, in der Zeichnung durch sie verdeckte Trägerarme der Trägerbasis 13 aufliegen. Das Schwenkgestell 14 hat ebenfalls eine U-förmige Gestalt.

Die Trägerbasis 13 sowie das Schwenkgestell 14 dienen zum Tragen und Befördern von Gegenständen auf dem Kraftfahrzeug-Träger 10. Beispielsweise sind an den Trägerarmen 18 Fahrradträgerrinnen 19 zum Aufstellen von Fahrrädern auf den Kraftfahrzeug-Träger 10 vorgesehen. Diese Fahrräder können mit flexiblen Riemen 20 befestigt werden.

Eine weitere Befestigungsmöglichkeit ergibt sich durch einen U-förmigen Bügel 21, der in Gebrauchsstellung des Kraftfahrzeug-Trägers 10 winkelig von der Trägerbasis 13 bzw. den Trägerarmen 18 absteht. In dieser nach oben vor die Trägerarme 18 vorstehenden Stellung kann der Bügel 21 mittels Klemmschrauben 22 festgelegt werden, die in ihrer Lösestellung ein Schwenken des Bügels 21 in Richtung der Trägerarme 18 ermöglichen. Dadurch baut der Kraftfahrzeug-Träger 10 in seiner Nichtgebrauchsstellung, in der seine Komponenten im Wesentlichen zusammengefaltet sind, d.h. beispielsweise auch die Fahrradträgerrinnen 19 in einen Innenraum zwischen den Trägerarmen 18 geschwenkt sind, äußerst klein.

An dem Bügel 21 können auf dem Kraftfahrzeug-Träger 10 aufgelegte Gegenstände, beispielsweise Fahrräder, zusätzlich befestigt werden. Erfindungsgemäße Befestigungseinrichtungen 30, von denen beispielhaft eine einzige dargestellt ist, dienen zur sicheren Befestigung der Fahrräder am Bügel 21, bauen gleichzeitig sehr kompakt und sind zudem bequem und schnell handhabbar:

Die Befestigungseinrichtung 30 umfasst eine Klammer 31, deren Klammerschenkel 32 an einem Klammerlager 33 beweglich zwischen einer Offenstellung und einer Klammerstellung gelagert sind.

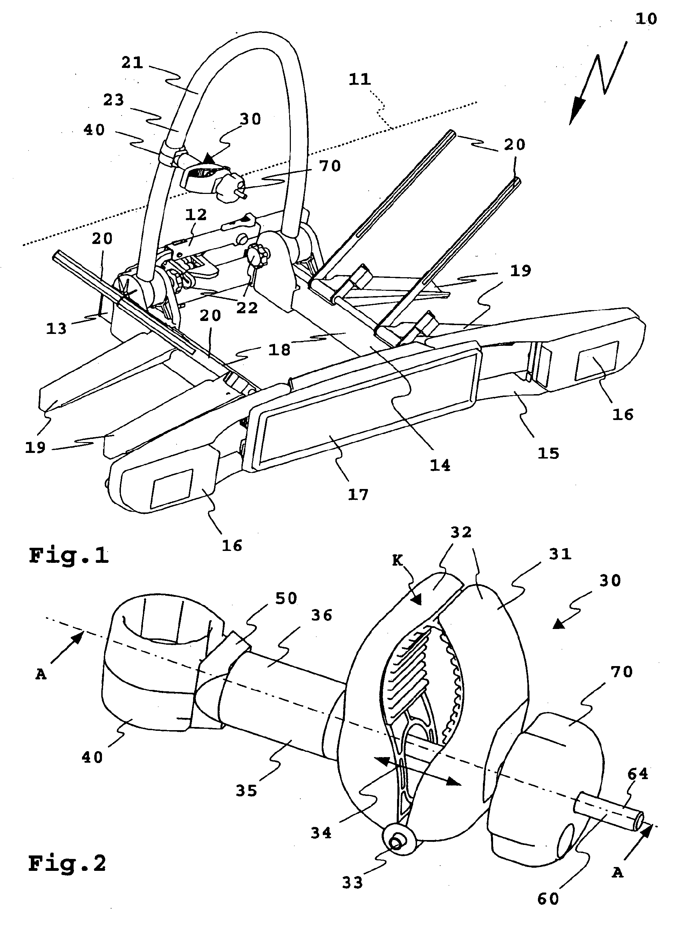

In Figur 2 ist beispielsweise die Klammerstellung K dargestellt, die zum Umgreifen bzw. Klammern des zu haltenden Gegenstandes dient, beispielsweise eines Rahmen-Rohres eines Fahrrades. Zwischen den Klammerschenkeln 32 kann in an sich bekannter Weise eine schematisch dargestellte Feder 34 angeordnet sein, die die beiden Klammerschenkel 32 in ihre Offenstellung beaufschlagt.

Zur Herstellung einer Distanz zwischen dem Bügel 21 und der Klammer 31, die ein auf einem der beiden Paare von Fahrradträgerrinnen 19 abgestelltes Fahrrad hält, in Figur 1 beispielsweise dasjenige Fahrrad, das näher beim Bügel 21 angeordnet ist, ist ein Distanzkörper 35, beispielsweise eine Distanzhülse 36 vorgesehen. Für eine Befestigungseinrichtung, die den vom Kraftfahrzeug 11 weiter entfernten Fahrradträgerrinnen 19 zugeordnet ist, würde man eine entsprechend längere Distanzhülse 36 vorsehen.

Die jeweilige Befestigungseinrichtung 30 ist mittels einer Schelle 40 an dem Bügel 21 befestigbar, der insofern einen Trägerkörper 23 für die Befestigungseinrichtung 30 bildet. Die Schelle 40 umgreift den jedenfalls im Bereich der Schelle 40 im Wesentlichen zylindrischen, beispielsweise durch einen Rohrkörper gebildeten Trägerkörper 23, mittels eines Ringkörpers 41, dessen Ringkörper-Spannenden 42 in einer Spannstellung S durch einen Spannkörper 50 im Sinne eines Verspannens des Trägerkörpers 23 gespannt sind.

In einer Lösestellung L des Spannkörpers 50 hingegen ist ein Innenquerschnitt 43 des Ringkörpers 41 vergrößert, so dass die Schelle 40, also insgesamt die Befestigungseinrichtung 30, entlang des Bügels 21 verschieblich ist. Zu einer guten Verschieblichkeit der Schelle 40 entlang des Bügels 21 tragen auch Stützvorsprünge 44 bei, die vom im Wesentlichen kreisförmigen Innenumfang 45 der Schelle 40 nach radial innen vorstehen und mit denen sich die Schelle 40 am Trägerkörper 23 abstützt. Dadurch haftet der Innenumfang 45 insbesondere bei feuchtem Trägerkörper 23 nicht flächig, adhäsiv an diesem an.

Zum Verspannen der Schelle 40 am Trägerkörper 23 ist ferner ein Zuganker 60 vorgesehen, der zugfest an dem Ringkörper 41 mittels einer Zuganker-Halterung 46 befestigt ist. Zugvorsprünge 62, die beispielsweise durch einen Vierkant 63 gebildet sind, sind in Zuganker-Aufnahmen 47 des Ringkörpers 41 aufgenommen. Die Zuganker-Aufnahmen 47 sind an den Ringkörper-Spannenden 42 vorgesehen und einander zugewandt offen. Die Zuganker-Aufnahmen 47 sind U-förmig. Durch die kantige Ausgestaltung der Zuganker-Aufnahmen 47 ist das Zugwiderlageelement 61, das wie gesagt mehrkantig oder polygonal an seinem Außenumfang ist, drehfest aufgenommen. Die Zuganker-Aufnahmen 47 weisen zwischen dem Innenquerschnitt 43 und dem Zuganker 60 angeordnete Vorsprünge 48 auf, so dass der Zuganker 60 auch in Lösestellung nicht unmittelbar in Kontakt mit dem Innenquerschnitt 43 angeordneten Trägerkörper 23 kommt. Der Zuganker 60 steht mit einem Zugankerstab 64 radial von der Schelle 40 ab. Der Zugankerstab 64 durchdringt eine an Übergreifvorsprüngen 49 vorgesehene Durchtrittsöffnung. Die Übergreifvorsprünge 49 sind Bestandteile der Zuganker-Aufnahmen 47 und übergreifen das Zugwiderlageelement 61 bezüglich des Innenquerschnitts 43 von radial außen.

Der Zugankerstab 64 durchdringt den Spannkörper 50, den Distanzkörper 35, die Klammer 31 nahe bei dem Klammerlager 33, zweckmäßigerweise die zwischen den Klammerschenkeln 32 angeordnete Feder 34 sowie schließlich eine Spannmutteranordnung 70, die vom freien Ende 65 des Zugankerstabes 64 her auf diesen aufgeschraubt ist.

Die Spannmutteranordnung 70 dient zum Spannen der Befestigungseinrichtung 30. Die Spannmutteranordnung 70 dient zum Schließen der Klammer 31 bzw. zum Beaufschlagen derselben in ihre Klammerstellung K und zudem zum Spannen der Schelle 40, d.h. zum Beaufschlagen des Spannkörpers 50 in dessen Spannstellung S.

Die Spannmutteranordnung 70 umfasst eine mehrteilige Spannmutter 71, die vorliegend zwei Spannmutterteile 72 aufweist. Die Spannmutter 71 kann mit einem Handgriffkörper 80 drehbetätigt werden, um einen zumindest im Bereich des freien Endes 65 des Zugankers 60 vorgesehenen Gewindeabschnitt 66 aufgeschraubt zu werden. Im Bereich des Gewindeabschnitts 66 bildet der Zuganker 60 einen Gewindekörper 67.

Durch ein Aufschrauben auf den Gewindeabschnitt 66 belastet die Spannmutter 71 zunächst die Klammer 31 bzw. deren Klammerschenkel 32 in die Klammerstellung K und zudem über die Klammer 31 und den Distanzkörper 35 - es können auch mehrere Distanzkörper vorgesehen sein - den Spannkörper 50 in seine Spannstellung S. Dabei stützt sich der Distanzkörper 35 auf einer Stützfläche 51 des Spannkörpers 50 ab. Die Stützfläche 51 ist ringförmig und erstreckt sich um einen Eingreifvorsprung 52 herum, der in einen Innenraum der Distanzhülse 36 eingreift. Der Eingreifvorsprung 52 ist kreiszylindrisch an seiner Außenseite passend zu einem kreiszylindrischen Innenumfang der Distanzhülse 36, so dass diese mit geringem oder keinem Spiel auf dem Spannkörper 50 aufsitzt.

An seiner dem Eingreifvorsprung 52 entgegengesetzten Seite weist der Spannkörper 50 einen Spannflächenteil 53 auf. Der Spannflächenteil 53 ist pyramidenstumpfartig.

Der Zuganker 60 durchdringt eine Durchtrittsöffnung 54 einer Wand 55 zwischen dem Eingreifvorsprung 52 und dem Spannflächenteil 53. Ein Innenumfang der Durchtrittsöffnung 54 passt zum Außenumfang des Zugankerstabs 64, so dass der Spannkörper 50 an dem Zuganker 60 geführt ist.

Wenn also die Spannmutteranordnung 70 auf den Gewindeabschnitt 66 aufgeschraubt wird, beaufschlagt sie den Spannkörper 50 zumindest indirekt, wobei dieser entlang einer durch eine Mittelachse des Zugankerstabs 64 definierte Spannbewegungsbahn 37 geführt ist. Der Spannkörper 50 wird dabei in Richtung der Schelle 40 verstellt, wobei Schrägflächen 56 an der Innenseite des Spannflächenteils 53 an Schrägflächen 38 an den Ringkörper-Spannenden 42 entlang gleiten, derart, dass diese zueinander hin verstellt werden. Dadurch nimmt der Innenquerschnitt 43 ab, wodurch sich die Schelle 40 am Trägerkörper 23 verspannt. Die Schrägflächen 38 sind an den den Zuganker-Aufnahmen 47 abgewandten Seiten der Ringkörper-Spannenden 42 vorgesehen. Die Schrägflächen 38 verlaufen von den dem Zuganker 60 zugewandten Enden der Ringkörper-Spannenden 42 her tangential weg in Richtung des im Wesentlichen kreisförmigen Außenumfangs des Ringkörpers 41.

Die Schrägflächen 38 und 56 sind vorliegend Planflächen. Die Schrägflächen 38, 56 liegen im Wesentlichen flächig aneinander an, so dass der Spannkörper 50 sozusagen auf die Schelle 40 bzw. den Ringkörper 41 aufgleitet. Dabei beaufschlagt der Spannkörper 50 die Ringkörper-Spannenden 42 zueinander hin, d.h. in Richtung der Spannbewegungsbahn 37.

Ein Abstand der Schrägflächen 38, 56 von der Spannbewegungsbahn 37 nimmt in Richtung eines Zentralbereiches 39 des Innenquerschnitts 43 zu. Dabei ist beim Ausführungsbeispiel eine symmetrische Anordnung getroffen, d.h. die Spannbewegungsbahn 37 bildet sozusagen eine Mittelachse oder Spiegelachse bezüglich der beidseits von ihr angeordneten Schrägflächen 38, 56. Dies erlaubt ein gleichmäßiges Spannen der beiden Ringkörper-Spannenden 42 zur Spannbewegungsbahn 37 hin.

Die Zugvorsprünge 62 und die sie aufnehmende Zugankerhalterung 46, mithin also eine Tiefe der Zuganker-Aufnahmen 47, ist mit einem Spiel 68 versehen, so dass eine Bewegung der Ringkörper-Spannenden 42 zur Spannbewegungsbahn 37 hin möglich ist. Dennoch greifen die Zugvorsprünge 62 stets ausreichend tief in die Zuganker-Aufnahmen 47 ein, so dass der Zuganker 60 stets sicher am Ringkörper 41 gehalten wird. Dazu trägt auch bei, dass die Ringkörper-Spannenden 42 in einen Innenraum 57 mit den Schrägflächen 56 des Spannkörpers 50 eingreifen. Zweckmäßigerweise liegen die Schrägflächen 56 auch im Bereich des Zugwiderlagerelements 61 außenseitig an den Ringkörper-Spannenden 42 an, so dass die Zuganker-Aufnahmen 47 in Richtung des Zugankers 60 kraftbeaufschlagt sind. Der Zuganker 60 wird somit also besonders sicher und fest am Ringkörper 41 gehalten.

Insgesamt ergeben sich also besonders günstige Kraftverhältnisse derart, dass sowohl die von dem Zuganker 60 ausgeübte Zugkraft als auch die durch den Spannkörper 50 ausgeübte, den Innenquerschnitt 43 verkleinernde Spannkraft stets in Richtung des Zentralbereichs 39 wirken.

Zudem ist auch eine besonders günstige, platzsparende Anordnung getroffen, da nämlich der Zuganker 60, der gleichzeitig eine Befestigungsbasis für die weiteren Komponenten der Befestigungseinrichtung 30, nämlich insbesondere der Klammer 31, bildet, radial vom Trägerkörper 23 absteht. Seitlich neben dem Trägerkörper 23 ist also kein Platz notwendig.

Die Handhabung der Spannmutteranordnung 70 ist besonders einfach und geht schnell vonstatten.

Der Handgriffkörper 80 ist knaufartig ausgestaltet und liegt günstig in der Hand eines Bedieners. Der Handgriffkörper 80 bildet ein Gehäuse 81 für die Spannmutter 71 sowie im Wesentlichen für einen Betätigungskörper 90, der zum Betätigen der Spannmutterteile 72 in die Eingriffstellung E vorgesehen ist.

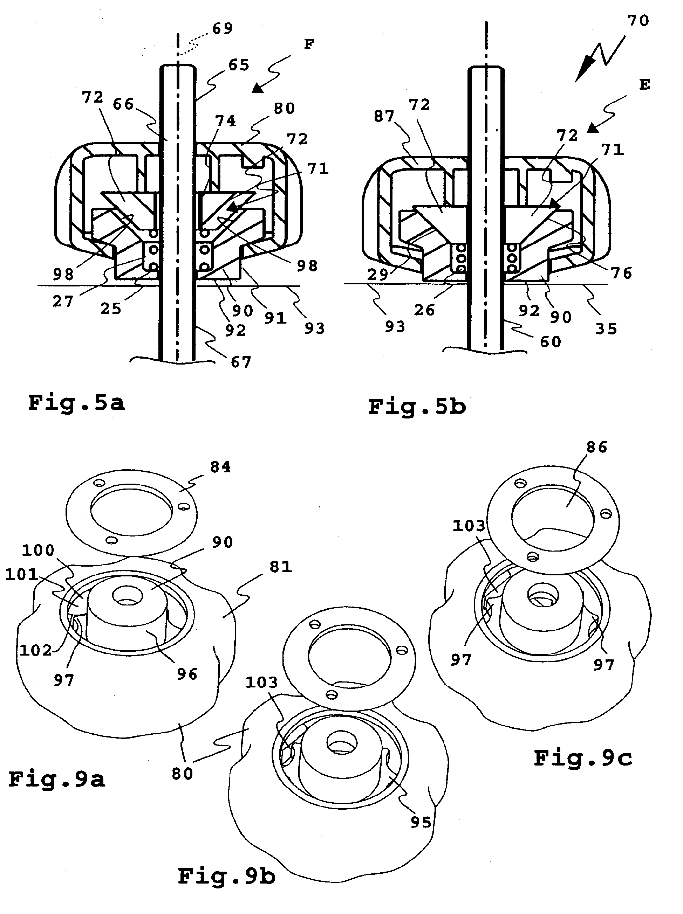

Prinzipiell könnte der Handgriffkörper 80 einteilig ausgestaltet sein, was in der Darstellung gemäß Figuren 5a, 5b der Fall ist, oder auch mehrteilig. Aus montagetechnischer Sicht ist es vorteilhaft, wenn der Innenraum 82 durch eine Montageöffnung 83 zugänglich ist, die durch einen Deckel 84 verschließbar ist. Der Deckel 84 ist beispielsweise mittels nicht dargestellter, durch Schraubenöffnungen 85 durchgesteckter Schraubbolzen oder Nieten am Gehäuse 81 befestigbar. Möglich wäre auch ein Gewinde am Außenumfang des Deckels 84, das in ein Gewinde am Innenumfang der Montageöffnung 83 eingeschraubt wird.

Der Deckel 84 hat eine Durchtrittsöffnung 86 für einen Stützabschnitt 91 des Betätigungskörpers 90. An einer Stirnseite des Stützabschnitts 91 ist eine Stützfläche 92 vorgesehen, mit der sich der Betätigungskörper 90 an einem Widerlager 93 abstützen kann, beispielsweise der Klammer 31. Der Stützabschnitt 91 ist im Wesentlichen zylindrisch. Die Stützfläche 92 hat eine Durchtrittsöffnung 94 für den Zuganker 60, insbesondere dessen Zugankerstab 64. Der Betätigungskörper 90 steht mit dem freien Ende des Stützabschnitts 91 vor das durch den Deckel 84 geschlossene Gehäuse 81 des Handgriffkörpers 80 vor, so dass sich der Betätigungskörper 90 auf dem Widerlager 93 abstützen kann, um in den Innenraum 82 hinein verlagert zu werden. Mithin ist also der Betätigungskörper 90 bezüglich des Handgriffkörpers 80 beweglich gelagert. Der Handgriffkörper 80 wird dabei beispielsweise durch den Innenumfang der Durchtrittsöffnung 86 geführt, an der der zylindrische Außenumfang des Stützabschnitts 91 entlang gleitet.

An dieser Stelle sei bemerkt, dass vorliegend die Durchtrittsöffnung 86 kreisförmig ist, korrespondierend dazu auch der Außenumfang des Stützabschnitts 91, so dass der Betätigungskörper 90 bezüglich der Durchtrittsöffnung 86 verdrehbar ist. Dort lässt sich auf einfache Weise aber auch eine Verdrehsicherung oder eine Drehmitnahme realisieren, beispielsweise durch einen Vorsprung am Außenumfang des Stützabschnitts 91, der in eine Ausnehmung an der Durchtrittsöffnung 86 eingreift (oder umgekehrt), durch eine Verzahnung zwischen beiden Komponenten oder dergleichen. Zweckmäßig ist es allerdings, wenn der Betätigungskörper 90 zwar drehfest am Handgriffkörper 80 ist, jedoch axial entlang einer durch den Zugankerstab 64 definierten Verstellachse 69 beweglich.

Der Zugankerstab 64 durchdringt nicht nur den Betätigungskörper 90 (Durchtrittsöffnung 94), sondern auch den Handgriffkörper 80, nämlich an einer Zuganker-Durchtrittsöffnung 88 an einer Deckwand 87 des Gehäuses 81.

Eine Drehmitnahme zwischen dem Handgriffkörper 80 und dem Betätigungskörper 90 wird durch einen Zahnkranz 95 des Betätigungskörpers 90 sowie ein Schloss 100 realisiert, das bezüglich des Handgriffkörpers 80 drehfest ist. Das Schloss 100 ist lediglich schematisch dargestellt und beispielsweise in eine Durchtrittsöffnung oder Einstecköffnung 89 an der Deckwand 87 eingesteckt. Der Zahnkranz 95 befindet sich an einer der Stützfläche 92 entgegengesetzten Seite des Betätigungskörpers 90 und steht nach radial außen vor den zylindrischen Außenumfang 96 des Stützabschnitts 91 vor. Die Zahnung des Zahnkranzes 95 ist ausgerundet, d.h. zwischen Zähnen 97 des Zahnkranzes 95 sind ausgerundete Abschnitte vorgesehen.

Wenn die Spannmutteranordnung 70 unverschlossen ist, das Schloss 100 also in seiner Offenstellung ist (Figur 9a), greift eine Mitnahmekontur, vorliegend eine Zylinderkontur 101, des Schlosses 100 in eine der Ausnehmungen zwischen den Zähnen 97 ein. Dadurch ist eine Drehmitnahme zwischen dem Schloss 100, das seinerseits fest im Handgriffkörper 80 sitzt und letztlich eine Drehmitnahme zwischen dem Handgriffkörper 80 und dem Betätigungskörper 90 realisiert.

Wenn das Schloss 100 jedoch geschlossen ist, ist eine Abflachung 103 des Riegelelements 102 in Richtung des Zahnkranzes 95 verstellt, beispielsweise verschwenkt, so dass der Zahnkranz 95 frei am Riegelelement 102 vorbei drehen kann. Wenn nun also ein Bediener den Handgriffkörper 80 dreht, ist dieser außer Eingriff mit dem Betätigungskörper 90 und dreht frei an diesem vorbei. Eine beispielhafte erste und zweite Drehposition ist in den Figuren 9b, 9c dargestellt, wobei das Schloss 100 mit der Abflachung 103 frei an den Zähnen 97 vorbei dreht. Somit kann also die mit dem Betätigungskörper 90 drehfest verbundene Spannmutter 71 nicht betätigt werden.

Die Drehmitnahme zwischen der Spannmutter 71 und dem Betätigungskörper 90 ist durch eine polygonale Aufnahme 99 realisiert, in der die Spannmutterteile 72, die außenseitig ebenfalls eine polygonale Kontur aufweisen, drehfest, jedoch axial bezüglich der Verstellachse 69 verstellbar, aufgenommen sind. Die beiden Spannmutterteile 72 sind als Keilstücke ausgestaltet. Die Spannmutterteile 72 haben an ihrer dem Gewindeabschnitt 66 zugewandten Schraubseite 73 zylindrische Ausnehmungen mit Innengewinden 74, die in der Eingriffstellung E in Eingriff mit dem Gewindeabschnitt 66 sind.

An einer der Schrägflächenseite 75 entgegengesetzten Schrägflächenseite eines jeweiligen Spannmutterteils 72 befindet sich eine Schrägfläche 76, mit der das Spannmutterteil 72 an einer Schrägfläche 98 des Betätigungskörpers 90 entlang gleitet. Die Schrägflächen 98 sind an einer Aufnahme 99 des Betätigungskörpers 90 vorgesehen, in der die beiden Spannmutterteile 72 im Wesentlichen aufgenommen sind.

Ein Abstand der Schrägflächen 76, 98 von der Verstellachse 69 ist im Bereich der Stützfläche 92 kleiner als in größerem Abstand zu der Stützfläche 92. Die Schrägflächen 76, 98 sind also zur Stützfläche 92 hin schräg geneigt. Die Schrägflächen 76, 98 bilden Bestandteile eines Schrägflächengetriebes oder Keilgetriebes 29 zum Verstellen der Spannmutterteile 72 in die Eingriffstellung E.

Zudem umfasst die Aufnahme 99 noch eine Federaufnahme 27, in der eine Feder 25 einer Federanordnung 26 aufgenommen ist. Die Feder 25 stützt sich einerseits am Betätigungskörper 90 und andererseits an den beiden Spannmutterteilen 72 ab, nämlich an einer Feder-Stützseite 77. Die Federanordnung 26 stützt sich am Boden der Aufnahme 99 ab. Die Feder-Stützseite 77 verläuft zwischen der jeweiligen Schraubseite 73 und der Schrägflächenseite 75 eines Spannmutterteils 72.

Weiterhin sind die Spannmutterteile 72 mit ihren Handgriffkörper-Stützseiten 78, d.h. den Feder-Stützseiten 77 entgegengesetzten Seiten, am Handgriffkörper 80 abgestützt, beispielsweise an der Deckwand 87 oder daran angeordneten Stützvorsprüngen (Figuren 5a, 5b).

Die Federanordnung 26 beaufschlagt die Spannmutterteile 72 in die Freigabestellung F (Figur 5a).

Zwischen den Stützseiten 77, 78 sowie der Schraubseite 73 und der Schrägflächenseite 75 erstreckt sich jeweils eine Drehmitnahmeseite 79 eines Spannmutterteils 72. Diese Drehmitnahmeseiten 79 liegen an korrespondierenden Drehmitnahmeseiten 28 der Aufnahme 99 zweckmäßigerweise im Wesentlichen flächig an, so dass die Spannmutterteile 72 beim Drehen des Betätigungskörpers 90 dreh-mitgenommen werden.

Die Bedienung der Spannmutteranordnung 70 gestaltet sich folgendermaßen:

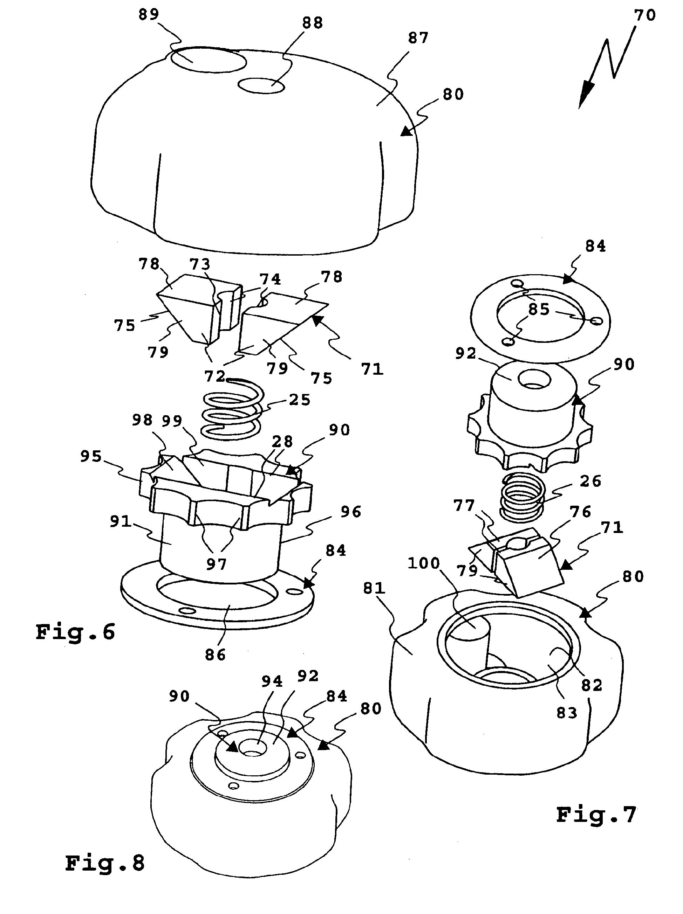

Solange sich die Stützfläche noch nicht am Widerlager 93 abstützt (Figur 5a), hält die sich am Betätigungskörper 90 abstützende Federanordnung 26 die Spannmutterteile 72 in der Freigabestellung F. Dabei stützt sich der Betätigungskörper 90 entgegen der Kraft der Federanordnung 26 am Handgriffkörper 80 ab, beispielsweise am Boden des Gehäuses 81 oder bei der mehrteiligen Bauform gemäß Figuren 6 bis 9c am Deckel 84. Zur Abstützung dient dabei beispielsweise ein Randvorsprung des Betätigungskörpers 90, vorliegend beispielsweise der Zahnkranz 95. Die Spannmutteranordnung 70 kann dabei entlang des Gewindeabschnitts 66 ohne Drehbetätigung frei verschoben werden, d.h. entlang der Verstellachse 69.

Wenn die Stützfläche 92 am Widerlager 93 anschlägt, mithin also beispielsweise die Spannmutteranordnung 70 zur Klammer 41 hin verstellt ist, kann die Spannmutter 71 durch Kraftbeaufschlagung in Richtung des Widerlagers 93 in die Eingriffstellung E verstellt werden. Ein Bediener drückt dazu beispielsweise auf die Deckwand 87. Der Handgriffkörper 80 belastet die Spannmutterteile 72 in Richtung des Widerlagers 93 entgegen der Federkraft der Federanordnung 26. Dabei gleiten die Spannmutterteile 72 mit ihren Schrägflächen 76 an den korrespondierenden Schrägflächen 98 des Betätigungskörpers 90 entlang, so dass die Innengewinde 74 in Richtung der Verstellachse 69, d.h. zum Gewindeabschnitt 66 hin, verlagert werden und schließlich in diesen eingreifen.

Dann kann die Spannmutter 71 zum Widerlager 93 hin geschraubt werden. Ein Lösen der Spannmutter 70 wird dabei dadurch verhindert, dass die Spannmutter 71 den Betätigungskörper 90 in Richtung des Widerlagers 93 drückt, dieser aber aufgrund des Widerlagers 93 nicht ausweichen kann und über das Keilgetriebe 29 die beiden Spannmutterteile 72 in die Eingreifstellung E mit einer Kraft beaufschlagt.

Es versteht sich, dass auch eine unmittelbare Drehmitnahme zwischen Handbetätigungskörper und Spannmutter realisiert sein könnte. Beispielsweise könnten die von der Deckwand 87 abstehenden, auf die Handgriffkörper-Stützseiten 78 wirkenden Stützvorsprünge in entsprechende Aufnahmen an den Spannmutterteilen 72 eingreifen. Der Betätigungskörper 90 könnte dann bezüglich des Handgriffkörpers 80 drehbeweglich gelagert sein.

## Patentansprüche

1. Befestigungseinrichtung für einen Kraftfahrzeug-Träger (10), insbesondere einen Fahrradträger, mit einer auf einen Gewindeabschnitt (66) eines Gewindekörpers (67) aufschraubbaren Spannmutter (71) einer Spannmutteranordnung (70), wobei die Spannmutter (71) mittels eines mit der Spannmutter (71) drehfest verbindbaren oder verbundenen Handgriffkörpers (80) drehbetätigbar ist, um die Spannmutter (71) entlang des Gewindeabschnitts (66) axial zu verstellen, wobei die Spannmutter (71) mindestens zwei relativ zueinander beweglich gelagerte Spannmutterteile (72) aufweist, die mittels eines Betätigungskörpers (90) zwischen einer Eingriffstellung (E), bei der Innengewinde (74) der Spannmutterteile (72) im Eingriff mit dem Gewindeabschnitt (66) des Gewindekörpers (67) sind, und einer Freigabestellung (F), bei der die Innengewinde (74) der Spannmutterteile (72) außer im Eingriff mit dem Gewindeabschnitt (66) des Gewindekörpers (67) sind und die Spannmutter (71) entlang des Gewindeabschnitt (66) verschieblich ist, verstellbar sind, **dadurch gekennzeichnet, dass** sie ein Schloss (100) aufweist, mit dem die Spannmutter an dem Gewindekörper (67) ortsfest verschließbar ist, und/oder dass der Betätigungskörper (90) drehfest mit der Spannmutter und/oder mit dem Handgriffkörper (80) verbindbar ist und die Spannmutteranordnung (70) zur Drehfestlegung des Handgriffkörpers (80) bezüglich der Spannmutter (71) ein Schloss (100) aufweist, das zwischen einer eine Drehmitnahme der Spannmutter (71) realisierenden Offenstellung und einer Schließstellung verstellbar ist, in der der Handgriffkörper (80) gegenüber der Spannmutter (71) frei drehbar ist.

2. Befestigungseinrichtung nach Anspruch 1, **dadurch gekennzeichnet, dass** ein Keilgetriebe (29) oder mindestens eine Schrägfläche zum Verstellen zwischen der Freigabestellung (F) und der Eingriffstellung (E) zwischen dem Betätigungskörper (90) und den Spannmutterteilen (72) vorhanden ist.

3. Befestigungseinrichtung nach Anspruch 1 oder 2, **dadurch gekennzeichnet, dass** insbesondere zwischen dem Betätigungskörper (90) und den Spannmutterteilen (72) eine Federanordnung (26) vorhanden ist, die die Spannmutterteile (72) in die Freigabestellung (F) belastet.

4. Befestigungseinrichtung nach einem der vorhergehenden Ansprüche, **dadurch gekennzeichnet, dass** der Betätigungskörper (90) eine Aufnahme (99) zum zumindest teilweisen Aufnehmen der Spannmutter (71) und/oder einer zwischen dem Betätigungskörper (90) und der Spannmutter (71) angeordneten Feder (25) aufweist.

5. Befestigungseinrichtung nach einem der vorhergehenden Ansprüche, **dadurch gekennzeichnet, dass** der Betätigungskörper (90) eine von der Spannmutter (71) abgewandte Stützfläche (92) zum Abstützen auf einem Widerlager (93) aufweist, derart, dass der Betätigungskörper (90) die Spannmutter (71) in die Eingriffstellung (E) belastet, wenn er auf der Stützfläche (92) abgestützt ist, wobei die Stützfläche (92) zweckmäßigerweise vor den Handgriffkörper (80) vorsteht.

6. Befestigungseinrichtung nach einem der vorhergehenden Ansprüche, **dadurch gekennzeichnet, dass** das Schloss (100) an der Spannmutteranordnung (70) und/oder am Betätigungskörper (90) angeordnet ist.

7. Befestigungseinrichtung nach einem der vorhergehenden Ansprüche, **dadurch gekennzeichnet, dass** das Schloss (100) über den Betätigungskörper (90) auf die Spannmutter (71) wirkt und in der Schließstellung außer Eingriff mit dem Betätigungskörper (90) und in der Offenstellung in Eingriff mit dem Betätigungskörper (90) ist.

8. Befestigungseinrichtung nach einem der vorhergehenden Ansprüche, **dadurch gekennzeichnet, dass** der Betätigungskörper (90), insbesondere axial, beweglich an dem Handgriffkörper (80) und/oder dem Gewindeabschnitt (66) gelagert ist und/oder dass der Gewindeabschnitt (66) den Betätigungskörper (90) durchdringt.

9. Befestigungseinrichtung nach einem der vorhergehenden Ansprüche, **dadurch gekennzeichnet, dass** der Betätigungskörper (90) und/oder die Spannmutter (71) im wesentlichen in einem Innenraum (82) des Handgriffkörpers (80) aufgenommen ist.

10. Befestigungseinrichtung nach einem der vorhergehenden Ansprüche, **dadurch gekennzeichnet, dass** sie eine Schelle (40) zur Befestigung an einem Trägerkörper (23) insbesondere des Kraftfahrzeug-Trägers (10), und einen Spannkörper (50) zum Verspannen eines ersten Ringkörper-Spannendes (42) und eines zweiten Ringkörper-Spannendes (42) eines Ringkörpers (41) der Schelle (40) zueinander hin aufweist, wobei sich der Spannkörper (50) an einander entgegengesetzten Außenseiten der beiden Ringkörper-Spannenden (42) abstützt, derart, dass ein zum Eingriff oder Durchgriff des Trägerkörpers (23) vorgesehener Innenquerschnitt (43) des Ringkörpers (41) bei einer Verstellung des Spannkörpers (50) von einer Lösestellung (L) in eine Spannstellung (S) im Sinne eines Verspannens der Befestigungseinrichtung (30) an dem Trägerkörper (23) verändert wird.

11. Befestigungseinrichtung nach Anspruch 10, **dadurch gekennzeichnet, dass** der Spannkörper (50) entlang einer zu einem Zentralbereich (39) des Innenquerschnitts (43) der Schelle (40) hin gerichteten, insbesondere linearen, Spannbewegungsbahn (37) aus der Lösestellung (L) in die Spannstellung (S) beweglich gelagert ist, und dass zwischen dem Spannkörper (50) und mindestens einem der Ringkörper-Spannenden (42) zu einer Spannkraftbeaufschlagung quer zu der Spannbewegungsbahn (37) mindestens eine Schrägfläche (38; 56) vorgesehen ist, deren Abstand von der Spannbewegungsbahn (37) in Richtung des Zentralbereichs (39) zunimmt.

12. Befestigungseinrichtung nach Anspruch 11, **dadurch gekennzeichnet, dass** die mindestens eine Schrägfläche (38; 56) mindestens eine an einem der Ringkörper-Spannenden (42) vorgesehene Schrägfläche (38) umfasst. und/oder dass die mindestens eine Schrägfläche (38; 56) eine an dem Spannkörper (50) an mindestens einer einem dem Ringkörper-Spannende (42) zurgeordneten Spannbereich vorgesehene Schrägfläche (56) umfasst und/oder dass die mindestens eine Schrägfläche (38; 56) an einander entgegengesetzten Seiten der Ringkörper-Spannenden (42) und/oder einander zugewandten Seiten des Spannkörpers (50) angeordnete Schrägflächen (38; 56) umfasst und/oder dass die mindestens eine Schrägfläche (38; 56) eine nicht selbsthemmende Neigung, insbesondere in einem Bereich von 20 bis 60 Grad, vorzugsweise etwa 30 Grad, schräg zu der Spannbewegungsbahn (37) aufweist.

13. Befestigungseinrichtung nach einem der Ansprüche 10 bis 12, **dadurch gekennzeichnet, dass** sie einen an einer Zuganker-Halterung (46) des Ringkörpers (41) zugfest befestigbaren Zuganker (60) aufweist, an dem sich der Spannkörper (50) in seiner Spannstellung (S) direkt oder indirekt abstützt, wobei zweckmäßigerweise mindestens eines der Ringkörper-Spannenden (42) zumindest einen Halterungsteil der Zuganker-Halterung (46) aufweist.

14. Kraftfahrzeug-Träger (10), insbesondere Fahrradträger, mit mindestens einer Befestigungseinrichtung (30) nach einem der vorhergehenden Ansprüche.

## Claims

1. Fastening device for a motor vehicle rack (10), in particular a cycle rack, with a clamping nut (71) of a clamping nut assembly (70) which may be screwed on to a threaded section (66) of a threaded body (67), wherein the clamping nut (71) may be made to rotate by means of a handle body (80) which is non-rotatably connectable or connected to the clamping nut (71) in order to move the clamping nut (71) axially along the threaded section (66), wherein the clamping nut (71) has at least two clamping nut sections (72) movably mounted relative to one another and which are adjustable by means of an actuating body (90) between an engaged position (E) in which internal threads (74) of the clamping nut sections (72) are in engagement with the threaded section (66) of the threaded body (67), and a released position (F) in which internal threads (74) of the clamping nut sections (72) are disengaged from the threaded section (66) of the threaded body (67) and the clamping nut (71) may be shifted along the threaded section (66), **characterised in that** it has a lock (100) with which the clamping nut may be locked immovably to the threaded body (67), and/or that the actuating body (90) may be connected non-rotatably to the clamping nut and/or the handle body (80) and the clamping nut assembly (70) has a lock (100), for non-rotatable fixing of the handle body (80) relative to the clamping nut (71), which is adjustable between an open position allowing rotary driving of the clamping nut (71) and a closed position in which the handle body (80) is freely rotatable relative to the clamping nut (71).

2. Fastening device according to claim 1, **characterised in that** there is provided a wedge mechanism (29) or at least one inclined surface for adjustment between the released position (F) and the engaged position (E) between the actuating body (90) and the clamping nut sections (72).

3. Fastening device according to claim 1 or 2, **characterised in that** there is provided, in particular between the actuating body (90) and the clamping nut sections (72), a spring assembly (26) which biases the clamping nut sections (72) into the released position (F).

4. Fastening device according to any of the preceding claims, **characterised in that** the actuating body (90) has a seating (99) for at least partial holding of the clamping nut (71) and/or a spring (25) provided between the actuating body (90) and the clamping nut (71).

5. Fastening device according to any of the preceding claims, **characterised in that** the actuating body (90) has a support surface (92), facing away from the clamping nut (71), for support on a thrust bearing (93) in such a way that the actuating body (90) biases the clamping nut (71) into the engaged position (E) when it is supported on the support surface (92), wherein the support surface (92) expediently protrudes from the handle body (80).

6. Fastening device according to any of the preceding claims, **characterised in that** the lock (100) is provided on the clamping nut assembly (70) and/or on the actuating body (90).

7. Fastening device according to any of the preceding claims, **characterised in that** the lock (100) acts via the actuating body (90) on the clamping nut (71) and in the closed position is disengaged from the actuating body (90) and in the open position is in engagement with the actuating body (90).

8. Fastening device according to any of the preceding claims, **characterised in that** the actuating body (90) is movably mounted, in particular axially, on the handle body (80) and/or the threaded section (66), and/or that the threaded section (66) passes through the actuating body (90).

9. Fastening device according to any of the preceding claims, **characterised in that** the actuating body (90) and/or the clamping nut (71) are or is accommodated substantially in an interior (82) of the handle body (80).

10. Fastening device according to any of the preceding claims, **characterised in that** it has a clamp (40) for fastening to a support body (23), in particular of the motor vehicle rack (10), and a clamping body (50) for bracing a first annular body clamping end (42) and a second annular body clamping end (42) of an annular body (41) of the clamp (40) towards one another, wherein the clamping body (50) rests on opposite outer sides of the two annular body clamping ends (42) in such a way that an inside cross-section (43) of the annular body (41) provided to engage or reach through the support body (23) is changed during adjustment of the clamping body (50) from a release position into a clamping position (S) for the purpose of bracing the fastening device (30) to the support body (23).

11. Fastening device according to claim 10, **characterised in that** the clamping body (50) is movably mounted along a clamping movement path (37), in particular linear, directed towards a central section (39) of the inside cross-section (43) of the clamp (40), from the release position (L) into the clamping position (S), and that at least one inclined surface (38; 56), with a clearance from the clamping movement path (37) which increases towards the central section (39), is provided between the clamping body (50) and at least one of the annular body clamping ends (42) for a clamping force application transversely to the clamping movement path (37).

12. Fastening device according to claim 11, **characterised in that** the inclined surface or surfaces (38; 56) includes or include at least one inclined surface (38) provided at one of the annular body clamping ends (42), and/or that the inclined surface or surfaces (38; 56) includes or include an inclined surface (56) provided on the clamping body (50) in at least one clamping section assigned to the annular body clamping end (42), and/or that the inclined surface or surfaces (38; 56) includes or include inclined surfaces (38; 56) provided at opposite sides of the annular body clamping ends (42) and/or facing sides of the clamping body (50), and/or that the inclined surface or surfaces (38; 56) has or have a non-self-locking inclination, in particular in a range from 20 to 60 degrees, preferably around 30 degrees, at an angle to the clamping movement path (37).

13. Fastening device according to any of claims 10 to 12, **characterised in that** it has a tie rod (60) which may be fastened with tension-resistance to a tie rod mounting (46) of the annular body (41) and on which the clamping body (50) rests directly or indirectly in its clamping position (S), wherein expediently at least one of the annular body clamping ends (42) has at least one mounting part of the tie rod mounting (46).

14. Motor vehicle rack (10), in particular cycle rack, with at least one fastening device (30) according to any of the preceding claims.

## Revendications

1. Dispositif de fixation pour un support de véhicule automobile (10), en particulier pour un support de bicyclette, comprenant un écrou de serrage (71) pouvant être vissé sur une section filetée (66) d'un corps fileté (67), d'un ensemble d'écrous de serrage (70), sachant que l'écrou de serrage (71) peut être actionné en rotation au moyen d'un corps de manche (80) pouvant être relié ou relié de manière solidaire en rotation à l'écrou de serrage (71) afin de déplacer de manière axiale l'écrou de serrage (71) le long de la section filetée (66), sachant que l'écrou de serrage (71) présente au moins deux parties d'écrou de serrage (72) montées de manière mobile l'une par rapport à l'autre, lesquelles peuvent être déplacées, au moyen d'un corps d'actionnement (90), entre une position de prise (E), dans le cadre de laquelle des filetages intérieurs (74) des parties d'écrou de serrage (72) sont en prise avec la section filetée (66) du corps fileté (67), et une position de dégagement (F), dans le cadre de laquelle les filetages intérieurs (74) des parties d'écrou de serrage (72) ne sont pas en prise avec la section filetée (66) du corps fileté (67) et l'écrou de serrage (71) peut être coulissé le long de la section filetée (66), **caractérisé en ce qu'**il présente un verrou (100), à l'aide lequel l'écrou de serrage peut être fermé de manière stationnaire au niveau du corps fileté (67), et/ou **en ce que** le corps d'actionnement (90) peut être relié de manière solidaire en rotation à l'écrou de serrage et/ou au corps de manche (80), et **en ce que** l'ensemble d'écrous de serrage (70) servant à immobiliser en rotation le corps de manche (80) par rapport à l'écrou de serrage (71) présente un verrou (100), qui peut être déplacé entre une position ouverte réalisant un entraînement en rotation de l'écrou de serrage (71) et une position fermée, dans laquelle le corps de manche (80) peut tourner librement par rapport à l'écrou de serrage (71).

2. Dispositif de fixation selon la revendication 1, **caractérisé en ce qu'**un mécanisme à clavette (29) au moins une surface oblique sont présents, aux fins du déplacement entre la position de dégagement (F) et la position de prise (E), entre le corps d'actionnement (90) et les parties d'écrou de serrage (72).

3. Dispositif de fixation selon la revendication 1 ou 2, **caractérisé en ce qu'**est présent, en particulier entre le corps d'actionnement (90) et les parties d'écrou de serrage (72), un ensemble de ressorts (26), qui contraint les parties d'écrou de serrage (72) dans la position de dégagement (F).

4. Dispositif de fixation selon l'une quelconque des revendications précédentes, **caractérisé en ce que** le corps d'actionnement (90) présente un logement (99) servant à loger au moins en partie l'écrou de serrage (71) et/ou un ressort (25) disposé entre le corps d'actionnement (90) et l'écrou de serrage (71).

5. Dispositif de fixation selon l'une quelconque des revendications précédentes, **caractérisé en ce que** le corps d'actionnement (90) présente une surface d'appui (92) opposée à l'écrou de serrage (71) servant à venir en appui au niveau d'un contre-palier (93), de telle manière que le corps d'actionnement (90) contraint l'écrou de serrage (71) dans la position de prise (E) lorsqu'il est en appui sur la surface d'appui (92), sachant que la surface d'appui (92) fait saillie de manière appropriée du corps de manche (80).

6. Dispositif de fixation selon l'une quelconque des revendications précédentes, **caractérisé en ce que** le verrou (100) est disposé au niveau de l'ensemble d'écrous de serrage (70) et/ou au niveau du corps d'actionnement (90).

7. Dispositif de fixation selon l'une quelconque des revendications précédentes, **caractérisé en ce que** le verrou (100) agit par l'intermédiaire du corps d'actionnement (90) sur l'écrou de serrage (71) et n'est pas en prise, dans la position de fermeture, avec le corps d'actionnement (90) et est en prise, dans la position d'ouverture, avec le corps d'actionnement (90).

8. Dispositif de fixation selon l'une quelconque des revendications précédentes, **caractérisé en ce que** le corps d'actionnement (90) est monté de manière mobile, en particulier axialement, au niveau du corps de manche (80) et/ou de la section filetée (66), et/ou **en ce que** la section filetée (66) traverse le corps d'actionnement (90).

9. Dispositif de fixation selon l'une quelconque des revendications précédentes, **caractérisé en ce que** le corps d'actionnement (90) et/ou l'écrou de serrage (71) sont logés essentiellement dans un espace intérieur (82) du corps de manche (80).

10. Dispositif de fixation selon l'une quelconque des revendications précédentes, **caractérisé en ce qu'**il présente un collier (40) destiné à être fixé au niveau d'un corps de support (23) en particulier du support de véhicule automobile (10), et un corps de serrage (50) servant à assembler par serrage une première extrémité de serrage de corps annulaire (42) et une deuxième extrémité de serrage de corps annulaire (42) d'un corps annulaire (41) du collier (40) l'une à l'autre, sachant que le corps de serrage (50) prend appui au niveau de côtés extérieurs opposés des deux extrémités de serrage de corps annulaire (42) de telle manière qu'une section transversale intérieure (43), prévue afin de venir en prise avec le corps de support (23) ou afin de le traverser, du corps annulaire (41) est modifiée lors d'un déplacement du corps de serrage (50) depuis une position de desserrage (L) dans une position de serrage (S) au sens d'un assemblage par serrage du dispositif de fixation (30) au corps de support (23).

11. Dispositif de fixation selon la revendication 10, **caractérisé en ce que** le corps de serrage (50) est monté de manière mobile, le long d'une voie de déplacement de serrage (37) orientée en direction d'une zone centrale (39) de la section transversale intérieure (43) du collier (40), en particulier linéaire, hors de la position de desserrage (L) dans la position de serrage (S), et **en ce qu'**est prévue, entre le corps de serrage (50) et au moins une des extrémités de serrage de corps annulaire (42) aux fins d'une application de force de serrage de manière transversale par rapport à la voie de déplacement de serrage (37), au moins une surface oblique (38 ; 56), dont la distance par rapport à la voie de déplacement de serrage (37) augmente en direction de la zone centrale (39).

12. Dispositif de fixation selon la revendication 11, **caractérisé en ce que** la surface oblique (38 ; 56) au moins au nombre de une comprend au moins une surface oblique (38) prévue au niveau de l'une des extrémités de serrage de corps annulaire (42), et/ou **en ce que** la surface oblique (38 ; 56) au moins au nombre de une comprend une surface oblique (56) prévue au niveau du corps de serrage (50) au niveau au moins d'une zone de serrage associée à l'une des extrémités de serrage de corps annulaire (42), et/ou **en ce que** la surface oblique (38 ; 56) au moins au nombre de une comprend des surfaces obliques (38 ; 56) disposées au niveau de côtés opposés les uns aux autres des extrémités de serrage de corps annulaire (42) et/ou au niveau de côtés tournés les uns vers les autres du corps de serrage (50), et/ou **en ce que** la surface oblique (38 ; 56) au moins au nombre de une présente une inclinaison sans blocage automatique, en particulier comprise dans une plage allant de 20 à 60 degrés, de préférence d'environ 30 degrés, de manière oblique par rapport à la voie de déplacement de serrage (37).

13. Dispositif de fixation selon l'une quelconque des revendications 10 à 12, **caractérisé en ce qu'**il présente un système d'ancrage de traction (60) pouvant être fixé de manière résistante à la traction au niveau d'un support de système d'ancrage par traction (46) du corps annulaire (41), au niveau duquel le corps de serrage (50) prend appui directement ou indirectement dans sa position de serrage (S), sachant que de manière appropriée au moins une des extrémités de serrage de corps annulaire (42) présente au moins une partie de support du support de système d'ancrage par traction (46).

14. Support de véhicule automobile (10), en particulier support de bicyclette, comprenant au moins un dispositif de fixation (30) selon l'une quelconque des revendications précédentes.
